# EUROPEAN PATENT SPECIFICATION

(11) **EP 3 086 149 B1**
(45) Date of publication and mention of the grant of the patent: **08.11.2017**
(21) Application number: 16166133.5
(22) Date of filing: 20.04.2016
(51) Int. Cl.: G02B 6/42, G02B 6/38

(54) **COAXIAL PHOTODETECTOR**
KOAXIALER FOTODETEKTOR
PHOTODÉTECTEUR COAXIAL

(30) Priority: 21.04.2015 CN 201510190352
(43) Date of publication of application: 26.10.2016
(73) Proprietor: Huawei Technologies Co., Ltd., Longgang District Shenzhen, Guangdong 518129 (CN); Advanced Fiber Resources (Zhuhai), Ltd, Zhuhai Guangdong 519080 (CN)
(72) Inventor: ZHU, Yesheng, 518129 Shenzhen (CN); LU, Jiannan, 519080 Zhuhai (CN); LIU, Xingyao, 518129 Shenzhen (CN); LIU, Junfeng, 518129 Shenzhen (CN); LIANG, Wenfu, 519080 Zhuhai (CN)
(74) Representative: Körber, Martin Hans

(56) References cited:
- US-A1- 2003 147 601
- US-A1- 2004 223 761
- US-A1- 2005 169 586
- US-A1- 2005 175 299
- US-A1- 2013 064 498

## Description

### TECHNICAL FIELD

The present invention relates to photodetectors, and in particular, to a coaxial photodetector.

### BACKGROUND

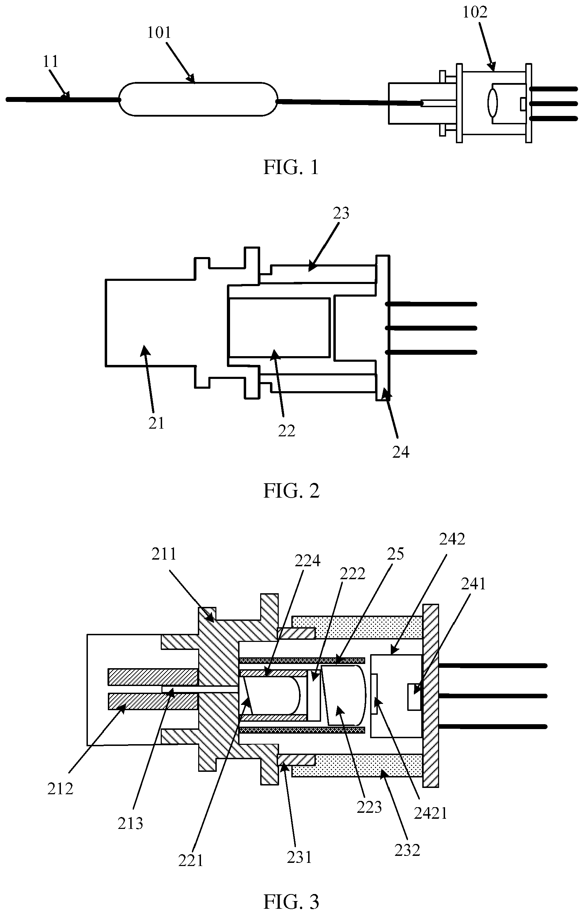

A coaxial photodetector is configured to covert an optical signal into an electrical signal. An existing coaxial photodetector does not have a function of receiving a particular wavelength. In some application in which receiving needs to be performed for a particular wavelength, a filtering apparatus needs to be added on a front end of an optical path of the coaxial photodetector to select a light beam having a particular wavelength, and then the coaxial photodetector receives the light beam having the particular wavelength. Referring to FIG. 1, FIG. 1 is a schematic structure diagram of a common optical path in the prior art. As shown in FIG. 1, an input optical path of a filtering apparatus 101 is connected to an optical fiber 11, an output optical path of the filtering apparatus 101 is connected to a coaxial photodetector 102 by using the optical fiber 11. An optical signal transmitted in the optical fiber 11 is output to the filtering apparatus 101, and after filtration by the filtering apparatus 101, a light beam having a particular wavelength in the optical signal is output and is transmitted to the coaxial photodetector 102 by the optical fiber 11, and is converted into an electrical signal by the coaxial photodetector 102.

However, in the application in which receiving is performed for a particular wavelength, an extra filtering apparatus needs to be added, which does not facilitate layout miniaturization of a module in which the coaxial photodetector is located, and the filtering apparatus and the coaxial photodetector are mutually connected by using an optical fiber, and a relatively large extra loss is caused to an optical signal after multiple times of conversion from free space to the optical fiber.

US 2004/0223761 A1 discloses a bidirectional transmitting and receiving device having a waveguide for sending light, a receiving/transmitting area (1/2) for receiving and processing light and a diffractive lens (3) operating as a filtering element between the waveguide area and the receiving transmitting area (1/2)

US 2005/0169586 A1 discloses a bidirectional optical transceiver, wherein a filtering element is disposed between a supporting holder for retaining an optical fiber and a TO-CAN.

US 2005/0175299 A1 discloses an optical sub-assembly package for use in receiver optical sub-assemblies or transmitter optical sub-assemblies in which the electrical connections between the transducer chip, e.g. photo-detector or light source, and the device printed circuit board is made by a single flexible circuit conductor extending through the wall of the package. The package is comprised of a housing and a stiffening plate, which encloses and end of the housing and forms a mechanical support for an end of the flexible circuit conductor.

US 2013/0064498 A1 discloses an optical sub-assembly module having a fiber for delivering optical signals, a transmitter, a receiver and an intermediate optical mechanism optically coupled to the fiber, the transmitter and the receiver. The intermediate optical mechanism includes a fiber-end interface for receiving the optical signals from the fiber or outputting the optical signals generated by the transmitter to the fiber; a transmission-end interface for receiving the optical signals from the transmitter; a reception-end interface or outputting the optical signals from the fiber to the receiver; and a filtering interface in the inside of the intermediate optical mechanism for realizing the optical signal delivery from the transmitter to the fiber and from the fiber to the receiver. The fiber-end interface, the transmission-end interface and the reception-end interface are parts of an integral whole while the filtering interface is a part of the same integral whole or an independent filter.

### SUMMARY

Embodiments of the present invention provide a coaxial photodetector, which can filter a light beam, so that a photodiode in the coaxial photodetector has a function of receiving a light beam having a particular wavelength, and an optical loss caused to an optical signal converted between free space and an optical fiber is reduced.

According to the invention as defined by claim 1, a coaxial photodetector is provided, including:
an optical port adapter, a filtering assembly, a connecting tube body, and a transistor-outline can (TO-CAN) including a photodiode, where two ends of the connecting tube body are separately connected to the optical port adapter and the TO-CAN, and the filtering assembly is in the connecting tube body, and
wherein the optical port adapter is configured to connect to an optical fiber, and a light beam from the optical fiber is guided to the filtering assembly by the optical port adapter, and is output to the photodiode after filtered by the filtering assembly,
wherein the filtering assembly comprises a collimation lens, a filtering piece, and a convergence lens that are sequentially arranged along an optical path; and
a first sleeve, the first sleeve is in the connecting tube body, and an end of the first sleeve and the optical port adapter are fastened to each other, and the filtering assembly is fastened in the first sleeve, wherein the filtering assembly further comprises a second sleeve having a first end and a second end, and the second sleeve is fastened in an end of the first sleeve close to the optical port adapter, and the collimation lens is fastened in the second sleeve, and the filtering piece is fastened on an end face of the second end of the second sleeve.

In a first implementation manner of the invention, a central axis of the filtering assembly is a preset distance deviated from a light output port of the optical port adapter that outputs a light beam to the filtering assembly, and a plane of incidence of the filtering piece is perpendicular to the central axis of the filtering assembly.

From the technical solutions above, it can be seen that the embodiments of the present invention have the following advantages:

In the present invention, a filtering assembly having a filtering function is integrated into a coaxial photodetector, and an overall size of the coaxial photodetector into which the filtering assembly is integrated is not increased significantly as compared with an overall size of the original coaxial photodetector, so that the coaxial photodetector in the present invention filters a light beam while keeping miniature, and a photodiode in the coaxial photodetector has a function of receiving a light beam having a particular wavelength. In addition, a quantity of times of conversion of an optical signal between free space and an optical fiber is reduced, thereby reducing an optical loss caused to the optical signal converted between the free space and the optical fiber.

### BRIEF DESCRIPTION OF DRAWINGS

FIG. 1 is a schematic diagram of a common optical path in the prior art;
FIG. 2 is a structural framework diagram of an embodiment of a coaxial photodetector according to the present invention;
FIG. 3 is a structural diagram of the coaxial photodetector shown in FIG. 2;
FIG. 4 is a schematic diagram of an operating principle of a coaxial photodetector according to the present invention; and
FIG. 5 is a schematic structural diagram of an optical port adapter in the coaxial photodetector shown in FIG. 3.

### DESCRIPTION OF EMBODIMENTS

Embodiments of the present invention provide a coaxial photodetector, which can filter a light beam, so that a photodiode in the coaxial photodetector has a function of receiving a light beam having a particular wavelength, and an optical loss caused to an optical signal converted between free space and an optical fiber is reduced.

To make a person skilled in the art understand the technical solutions in the present invention better, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The terms "include", "contain" and any other variants in the specification, claims, and the accompanying drawings of the present invention mean to cover the non-exclusive inclusion, for example, a process, method, system, product, or device that includes a list of steps or units is not necessarily limited to those units, but may include other units not expressly listed or inherent to such a process, method, system, product, or device.

Referring to FIG. 2, FIG. 2 is a structural framework diagram of an embodiment of a coaxial photodetector according to the present invention. In this embodiment, the coaxial photodetector includes an optical port adapter 21, a filtering assembly 22, a connecting tube body 23, and a transistor-outline can (TO-CAN) 24.

Referring to FIG. 3, FIG. 3 is a structural diagram of the coaxial photodetector shown in FIG. 2. In this embodiment, the TO-CAN 24 includes a photodiode 241, configured to convert an input optical signal into an electrical signal. Two ends of the connecting tube body 23 are separately connected to the optical port adapter 21 and the TO-CAN 24, so that the optical port adapter 21 and the TO-CAN 24 are fastened to each other. Specifically, the two ends of the connecting tube body 23 may be separately connected to the optical port adapter 21 and the TO-CAN 24 by means of adhesion or welding (for example, electric resistance welding), to ensure air-tightness of a hollow area inside the connecting tube body 23. Certainly, the foregoing connection manner is merely exemplary, and no limitation is set herein.

In the connecting tube body 23, the filtering assembly 22 is further disposed between the optical port adapter 21 and the TO-CAN 24, and is configured to transmit light within a preset range in an input light beam and reflect other light in the input light beam except the light within the preset range.

The optical port adapter 21 is configured to connect to an optical fiber, a light beam from the optical fiber is guided to the filtering assembly 22 by the optical port adapter 21, and a part of the light transmitted by the filtering assembly 22 is output to the photodiode 241.

In this embodiment, a filtering assembly having a filtering function is integrated into a coaxial photodetector, and an overall size of the coaxial photodetector into which the filtering assembly is integrated is not increased significantly as compared with an overall size of the original coaxial photodetector, so that the coaxial photodetector in the present invention implements a function of receiving a particular wavelength while keeping miniature. In addition, a quantity of times of conversion of an optical signal between free space and an optical fiber is reduced, thereby reducing an optical loss caused to the optical signal converted between the free space and the optical fiber.

In this embodiment, a structure of the filtering assembly 22 has multiple forms, and a specific structure is described in the following with reference to FIG. 3. As shown in FIG. 3, the filtering assembly 22 includes a collimation lens 221, a filtering piece 222 and a convergence lens 223 that are sequentially arranged along an optical path. The light beam from the optical fiber is guided by the optical port adapter 21 to the collimation lens 221 for collimation. The collimated light beam is input to the filtering piece 222, and the filtering piece 222 is configured to transmit light whose wavelength is within a preset range and reflect light whose wavelength is within another range except the preset range. In this embodiment, the filtering piece 222 is a light filter, and certainly, the filtering piece 222 may also have another structural form, which is not limited herein. Light beams transmitted by the filtering piece 222 are converged to the photodiode 241 in the TO-CAN 24 by the convergence lens 223, and converted into an electrical signal by the photodiode 241.

Because of a design principle of the light filter that a curve of a transmittance of a light beam that is input to the light filter changes with a change of an incidence angle of the input light beam, in some application, a coaxial photodetector has a relatively strict requirement on a wavelength range of a light beam that is input to a photodiode. Therefore, in the prior art, a common assembly method is to adjust a placement angle of the light filter to change the incidence angle of the input light beam of the light filter, so that a spectrum of a light beam transmitted by the light filter meets a requirement. However, in this assembly method, an offset is easily caused when the light filter is fastened by means of adhesion after the placement angle is adjusted, causing a difference between the spectrum of the light beam transmitted by the light filter and a target spectrum.

Preferably, in this embodiment, a central axis of the filtering assembly 22 is a preset distance deviated from a light output port of the optical port adapter 21, and a plane of incidence of the filtering piece 222 is perpendicular to the central axis of the filtering assembly 22. For a clear description, in the filtering assembly in this embodiment, an optical axis of the collimation lens and an optical axis of the convergence lens coincide, and the central axis of the filtering assembly 22 refers to the coincident optical axis of the collimation lens 221 and the convergence lens 223. The light output port of the optical port adapter 21 refers to a light output port of the optical port adapter 21 that is configured to output a light beam to the filtering assembly 22.

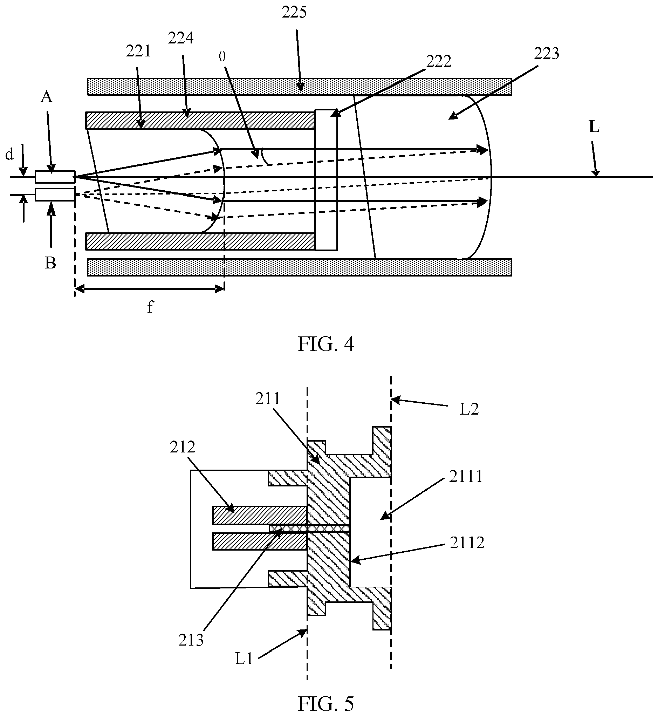

As shown in FIG. 4, FIG. 4 is a schematic diagram of an operating principle of a coaxial photodetector according to the present invention. A position of A in FIG. 4 is on a focal point on the side of a plane of incidence of the collimation lens 221, and a position of B is a position that is a preset distance d deviated from the position of A in a direction perpendicular to an optical axis L. When the light output port of the optical port adapter 21 is at the position of A, divergent light beams output from the light output port of the optical port adapter 21 are collimated by the collimation lens 221 into a parallel light beam parallel to the optical axis L for output. When the light output port of the optical port adapter 21 is at the position of B, divergent light beams output from the light output port of the optical port adapter 21 are collimated by the collimation lens 221 into a parallel light beam for output, where an included angle of the parallel light and the optical axis L is θ, θ=arctan(d/f), and f is a focal length of the collimation lens 221.

In this way, in a process of assembling the coaxial photodetector, the placement angle of the filtering piece does not need to be adjusted when the filtering piece is fastened, but the filtering assembly is moved to change a deviation distance between the central axis of the filtering assembly and the light output port of the optical port adapter, so as to adjust an incidence angle of a light beam that is input to the filtering piece, and therefore a position of the filtering assembly may be adjusted to a position at which a spectrum of a light beam transmitted by the filtering piece satisfies a target spectrum. Because it is not easy to cause a deviation when the filtering assembly is fastened at a position that is adjusted, the structure used in the present invention can improve a yield rate.

In this embodiment, for convenience of movement of the filtering assembly, preferably, the coaxial photodetector further includes a first sleeve 25. The first sleeve 25 is disposed in the connecting tube body 23, and one end of the first sleeve and the optical port adapter 21 are fastened to each other. For example, the first sleeve 25 may be fastened to the optical port adapter 21 by means of adhesion or welding. The filtering assembly 22 is fastened in the first sleeve 25. Specifically, the filtering assembly 22 may be adhered in the first sleeve 25 or inlaid in the first sleeve 25 by means of interference fit. In this way, in the process of assembling the coaxial photodetector, the filtering assembly may be moved by moving the first sleeve.

When the coaxial photodetector in the present invention is assembled, the first sleeve in which the filtering assembly is fastened may be fastened to the optical port adapter, the connecting tube body may be fastened to the TO-CAN 24, and then the optical port adapter and the TO-CAN 24 are mutually connected. The structure of the coaxial photodetector in the present invention facilitates assembly of the coaxial photodetector, and reduces assembly costs.

In this embodiment, there are multiple methods for the collimation lens 221 and the filtering piece 222 in the filtering assembly 22 to be fastened to each other. Preferably, the filtering assembly 22 further includes a second sleeve 224 having a first end and a second end, and the first end of the second sleeve 224 and the optical port adapter 21 are fastened to each other. Specifically, in this embodiment, the second sleeve 224 is fastened in an end of the first sleeve 25 closed to the optical port adapter 21.

The collimation lens 221 is fastened in the second sleeve 224, and the filtering piece 222 is fastened on an end face of the second end of the second sleeve 224. A plane on which the end face of the second end of the second sleeve 224 is located is perpendicular to the central axis of the filtering assembly 22, so that the filtering piece 222 fastened on the end face of the second end is perpendicular to the central axis of the filtering assembly 22. Specifically, the collimation lens 221 may be fastened in the second sleeve 224 by means of interference fit in the second sleeve, and the filtering piece 222 may be adhered on the end face of the second end of the second sleeve.

In this embodiment, because the second sleeve is disposed, the collimation lens and the filtering piece do not need to be coupled and adjusted when the filtering assembly is assembled, thereby simplifying the process of assembling the coaxial photodetector, avoiding decrease in a yield rate of the coaxial photodetector caused by a disqualified placement angle of the light filterer, and facilitating batch production of the coaxial photodetector.

In the present invention, when the coaxial photodetector is assembled, and the optical port adapter 21 to which the filtering assembly 22 is fastened is connected to the TO-CAN 24 by using the connecting tube body 23, the photodiode 241 in the TO-CAN 24 is possibly not on a focal point of the convergence lens 223, that is, a light spot formed on the photodiode 241 by light beams converged by the convergence lens 223 is not a convergent light spot.

Therefore, preferably, the connecting tube body 23 is adjustable in length. In this way, a distance between the convergence lens 223 and the photodiode 241 in the TO-CAN 24 may be adjusted by adjusting the length of the connecting tube body 23, so that the photodiode 241 is on the focal point of a convergence lens.

Alternatively, the connecting tube body 23 may also be not adjustable in length. Preferably, in this embodiment, the connecting tube body 23 includes a regulating ring 231 and a connecting sleeve 232 that are connected end to end, an end of the regulating ring 231 far away from the connecting sleeve 232 is connected to the optical port adapter 21, an end of the connecting sleeve 232 far away from the regulating ring 231 is connected to the TO-CAN 24. In this way, during product assembly, the regulating ring 231 having different lengths may be conveniently selected for assembly with the connecting sleeve 232 according to different requirements, and the regulating ring functions to adjust a distance between the filtering assembly and the photodiode. Preferably, the regulating ring 231 may be made of an insulation material, so that the regulating ring 231 also has a galvanic isolation function. The insulation material may be a ceramic material, which is not limited herein.

In the prior art, a structure of a TO-CAN generally includes a tube base and a photodiode disposed on the tube base, the photodiode is sealed in space enclosed by a tube cap and the tube base, the tube cap is provided with a spherical transmissive window, and a light beam is input to the photodiode through the light transmissive window.

Preferably, in this embodiment, the photodiode 241 is fastened on a side of the tube base facing the connecting tube body 23. Different from the TO-CAN in the prior art, in this embodiment, a transmissive window 2421 on the tube cap 242 in the TO-CAN 24 is planar. In this way, the distance between the convergence lens 223 and the photodiode 241 may be reduced, thereby reducing the length of the coaxial photodetector, and facilitating miniaturization of the coaxial photodetector.

In this embodiment, an optical port adapter has multiple structural forms. A specific structure is described in the following with reference to FIG. 3 and FIG. 5. FIG. 5 is a schematic structural diagram of the optical port adapter in the coaxial photodetector shown in FIG. 3. In this embodiment, the optical port adapter 21 includes a base 211, a sleeve 212, and a ferrule 213 connected to the optical fiber. The base 211 may be made of a metal material, and has a first end face (which is represented by a dashed line L1 in the figure) and a second end face (which is represented by a dashed line L2 in the figure) that are opposite to each other. The sleeve 212 and the ferrule 213 may be made of a ceramic material.

A through hole 2111 running through the first end face and the second end face is disposed on the base 211, and an opening aperture of the through hole 2111 on the first end face is smaller than an opening aperture of the through hole 2111 on the second end face, so that an annular step 2112 facing the second end face is formed on an inner wall of the through hole 2111.

The filtering assembly 22 is inserted into the through hole 2111 from the side of the second end face of the base 211 and abuts against the annular step 2112. The sleeve 212 has an end fastened on the first end face of the base 211, and the ferrule 213 has one part embedded in the sleeve 212 and the other part embedded in the through hole 2111.

When the optical port adapter 21 is connected to the optical fiber, an end of the ferrule 213 far away from the base 211 is connected to a fiber interface, where the fiber interface is connected to the optical fiber, so that the ferrule 213 can receive a light beam from the optical fiber, and guide the light beam to the filtering assembly 22 in the connecting tube body 23.

In this embodiment, a part of the length of the ferrule and a part of the length of the filtering assembly coincide with the thickness of the base, which can reduce the length of the coaxial photodetector, and facilitate miniaturization of the coaxial photodetector. It should be noted that in this embodiment, the optical port adapter may further include other parts, and is not limited to the parts described above, which is not limited herein.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of appended claims.

## Claims

1. A coaxial photodetector, comprising:
an optical port adapter (21), a filtering assembly (22), a connecting tube body (23), and a transistor-outline can (24), TO-CAN, comprising a photodiode (241), wherein two ends of the connecting tube body (23) are separately connected to the optical port adapter (21) and the TO-CAN (24), and the filtering assembly (22) is in the connecting tube body (23), and
wherein the optical port adapter (21) is configured to connect to an optical fiber (11), and a light beam from the optical fiber is guided to the filtering assembly (22) by the optical port adapter (23), and is output to the photodiode after filtered by the filtering assembly (22), wherein the coaxial photodetector further comprises a first sleeve (225), the first sleeve (225) is in the connecting tube body (23), and an end of the first sleeve and the optical port adapter are fastened to each other, **characterized in that** the filtering assembly comprises a collimation lens (221), a filtering piece (222), and a convergence lens (223) that are sequentially arranged along an optical path; and the filtering assembly (22) is fastened in the first sleeve (225), wherein the filtering assembly further comprises a second sleeve (224) having a first end and a second end, and the second sleeve is fastened in an end of the first sleeve close to the optical port adapter (21), and the collimation lens (221) is fastened in the second sleeve (224), and the filtering piece is fastened on an end face of the second end of the second sleeve.

2. The coaxial photodetector according to claim 1, wherein a central axis of the filtering assembly is a preset distance (d) deviated from a light output port of the optical port adapter that outputs a light beam to the filtering assembly, and a plane of incidence of the filtering piece is perpendicular to the central axis of the filtering assembly.

## Patentansprüche

1. Koaxialer Fotodetektor, umfassend:
einen optischen Anschlussadapter (21), eine Filterbaugruppe (22), einen Verbindungsrohrkörper (23) und einen "Transistor-Outline-Can", TO-CAN, (24), der eine Fotodiode (241) umfasst, wobei zwei Enden des Verbindungsrohrkörpers (23) getrennt mit dem optischen Anschlussadapter (21) und dem TO-CAN (24) verbunden sind und wobei sich die Filterbaugruppe (22) in dem Verbindungsrohrkörper (23) befindet, und
wobei der optische Anschlussadapter (21) konfiguriert ist, um mit einem Lichtwellenleiter (11) verbunden zu werden, und wobei ein Lichtstrahl aus dem Lichtwellenleiter durch den optischen Anschlussadapter (23) zu der Filterbaugruppe (22) geleitet wird und nach dem Filtern durch die Filterbaugruppe (22) an die Fotodiode ausgegeben wird,
wobei der koaxiale Fotodetektor außerdem eine erste Hülse (225) umfasst, wobei sich die erste Hülse (225) in dem Verbindungsrohrkörper (23) befindet, und wobei ein Ende der ersten Hülse und der optische Anschlussadapter aneinander befestigt sind;
**dadurch gekennzeichnet, dass**
die Filterbaugruppe eine Kollimationslinse (221), ein Filterbauteil (222) und eine Konvergenzlinse (223) umfasst, die hintereinander entlang eines optischen Pfads angeordnet sind; und die Filterbaugruppe (22) in der ersten Hülse (225) befestigt ist, wobei die Filterbaugruppe außerdem eine zweite Hülse (224) umfasst, die ein erstes Ende und ein zweites Ende aufweist, und wobei die zweite Hülse an einem Ende der ersten Hülse in der Nähe des optischen Anschlussadapters (21) befestigt ist, und wobei die Kollimationslinse (221) in der zweiten Hülse (224) befestigt ist, und wobei das Filterbauteil an einer Endfläche des zweiten Endes der zweiten Hülse befestigt ist.

2. Koaxialer Fotodetektor nach Anspruch 1, wobei eine Zentralachse der Filterbaugruppe um einen voreingestellten Abstand (d) von einem Lichtausgangsanschluss des optischen Anschlussadapters abweicht, der einen Lichtstrahl an die Filterbaugruppe ausgibt, und wobei eine Einfallsebene des Filterbauteils senkrecht zur Zentralachse der Filterbaugruppe steht.

## Revendications

1. Photodétecteur coaxial, comprenant:
un adaptateur de port optique (21), un ensemble filtrant (22), un corps de tube de liaison (23), et un boîtier de contour de transistor (24), TO-CAN, comprenant une photodiode (241), dans lequel deux extrémités du corps de tube de liaison (23) sont séparément reliées à l'adaptateur de port optique (21) et au TO-CAN (24), et l'ensemble filtrant (22) se trouve dans le corps de tube de liaison (23), et
dans lequel l'adaptateur de port optique (21) est configuré pour se connecter à une fibre optique (11), et un faisceau lumineux provenant de la fibre optique est guidé vers l'ensemble filtrant (22) par l'adaptateur de port optique (23), et est délivré à la photodiode après avoir été filtré par l'ensemble filtrant (22),
dans lequel le photodétecteur coaxial comprend en outre un premier manchon (225), le premier manchon (225) se trouve dans le corps de tube de liaison (23), et une extrémité du premier manchon et l'adaptateur de port optique sont fixés l'un à l'autre, **caractérisé en ce que** l'ensemble filtrant comprend une lentille de collimation (221), une pièce filtrante (222), et une lentille de convergence (223) qui sont séquentiellement agencées le long d'un chemin optique;
et l'ensemble filtrant (22) est fixé dans le premier manchon (225), dans lequel l'ensemble filtrant comprend en outre un second manchon (224) ayant une première extrémité et une seconde extrémité, et le second manchon est fixé dans une extrémité du premier manchon à proximité de l'adaptateur de port optique (21), et la lentille de collimation (221) est fixée dans le second manchon (224), et la pièce filtrante est fixée sur une face d'extrémité de la seconde extrémité du second manchon.

2. Photodétecteur coaxial selon la revendication 1, dans lequel un axe central de l'ensemble filtrant se trouve à une distance prédéfinie (d) écartée d'un port de sortie de lumière de l'adaptateur de port optique qui délivre un faisceau lumineux à l'ensemble filtrant, et un plan d'incidence de la pièce filtrante est perpendiculaire à l'axe central de l'ensemble filtrant.
